# EUROPEAN PATENT APPLICATION

(11) **EP 4 715 766 A1**
(43) Date of publication of application: **25.03.2026**
(21) Application number: 24461622.3
(22) Date of filing: 20.09.2024
(51) Int. Cl.: G07B 15/02, G06Q 50/40, G07C 1/30, G06Q 30/0283

(54) **A SYSTEM AND METHOD FOR SUPPORTING A PARKING START-STOP PROCESS**

(71) Applicant: Pad Projekt Sp. z o.o., 03-687 Warszawa (PL)
(72) Inventor: IWANCZYK, Bartlomiej, 03-687 Warszawa (PL); IRACKI, Jakub, 03-455 Warszawa (PL)
(74) Representative: Kancelaria Eupatent.pl Sp. z o.o.

(57) **Abstract**

A system for supporting a parking start-stop process of a vehicle, the system comprising a control device (110) for placing within the vehicle, the control device (110) comprising: a motion detector (113) for detecting vehicle movement; a controller (114) for processing data from the motion detector (113); a wireless communication module (115) for communicating with a user's device (140) operating a parking application (141); wherein the control device (110) is configured to send a message to the user's device (140) to invoke stop of parking process via the parking application, upon detecting that the vehicle is in motion based on data from the motion detector (113).

## Description

### TECHNICAL FIELD

The present invention pertains to vehicle parking management systems, specifically automated systems for managing parking fees in paid parking zones. It integrates control devices and parking applications on user devices to facilitate start-stop transactions with minimal user intervention.

### BACKGROUND

Parking fee collection systems have evolved significantly, employing various methods to streamline the process for users. Traditional parking meters required users to insert coins or tokens, which was inconvenient as users needed to carry change and manually extend their parking time.

Recently, mobile technology has led to the development of parking applications that allow users to pay for parking via their smartphones. These parking applications typically require users to manually start and stop their parking sessions. Users must open the app, select their parking location, and initiate the payment process. When they return to their vehicle, they must remember to stop the payment to avoid unnecessary charges. While these parking applications offer more convenience than traditional meters, they still rely heavily on user interaction and are prone to user errors, such as forgetting to stop the payment.

Another solution involves parking kiosks, where users can pay for parking by entering their vehicle's license plate number and the desired parking duration. These kiosks often accept various payment methods, including credit cards and mobile payments. However, similar to parking applications, they require users to manually manage their parking time, which can lead to overpayment if the user forgets to return to the kiosk to extend or stop the session.

Some advanced parking systems integrate with vehicle sensors and onboard computers to provide more automated solutions. These systems can detect when a vehicle enters or exits a parking zone and automatically start or stop the parking session accordingly. However, these systems often require complex installations and integration with the vehicle's electronics, making them less accessible and more expensive for the average user.

Additionally, there are parking solutions that use RFID tags or license plate recognition technology to automatically identify vehicles as they enter and exit parking facilities. These systems can automatically charge the associated account without any user interaction. While effective in controlled environments like parking garages, they are less practical for on-street parking due to the need for extensive infrastructure and potential privacy concerns.

Overall, while various parking fee collection solutions are available, each has its limitations, particularly in terms of user convenience and the potential for user error. The need for a more seamless and automated approach to managing parking fees remains a significant challenge in the industry.

### SUMMARY OF THE INVENTION

The present invention addresses issues associated with conventional parking payment systems, particularly those requiring manual initiation and termination of parking transactions via mobile devices. Specifically, the invention mitigates the risk of users forgetting to terminate parking payments.

The control device automatically terminates the parking process when it detects that the vehicle is in motion, thereby preventing unnecessary charges. This automation is achieved through the control device's ability to recognize vehicle movement, leveraging data from motion detectors such as accelerometers or gyroscopes. The control device's firmware processes the sensor data to accurately determine the vehicle's state and send a message to the user's device to invoke the stop of the parking process via the parking application, upon detecting that the vehicle is in motion. By automating the start and stop functions of parking payments, the system minimizes user engagement, enhancing convenience and reducing the likelihood of user error.

Additionally, the invention includes a feature that accurately determines when a user has started parking, i.e., when the vehicle is stopped and the user exits the vehicle. This determination is made without requiring integration with the vehicle's components. The system can prompt the user to initiate payment if the parking application detects that the vehicle is in a paid parking zone (or initiate automatic payment), thus preventing the user from neglecting to start the payment. This feature leverages existing wireless communication technologies in a novel way to enhance user convenience and reduce user errors.

Furthermore, the invention enhances safety by incorporating a feature that alerts the driver if a child is left in the vehicle. This is facilitated by an optional passenger monitor device that communicates with the main control device. The passenger monitor device, comprising an occupancy sensor, detects the presence of a passenger, particularly a child, and triggers an alert on the user's phone if the driver leaves the vehicle with a child still inside. This feature is crucial for preventing potentially dangerous situations, especially during high-temperature periods. The use of occupancy sensors in this context provides a novel application of existing technology to address an important safety concern.

To solve at least some of the problems discussed above, the present invention provides a support system and method for managing parking fees in paid parking zones, specifically configured to facilitate start-stop transactions with minimal user intervention. The system comprises a control device that can be mounted within the vehicle. An important feature of the control device is its capability to automatically terminate parking payments upon detecting that the vehicle is in motion. This is achieved through a motion detector used to determine the vehicle's state (e.g., at a standstill or in motion) and communicates this information to the controller. The controller, typically in a sleep state to conserve battery power, activates upon receiving data indicating vehicle movement and sends a command to the user's device to terminate the parking payment. The control device's firmware may include power management routines to optimize battery life, ensuring durability and reliability over extended periods of use.

The control device communicates with the user's device, such as a smartphone, tablet, smartwatch, or the vehicle's onboard computer, via a wireless module. Upon detecting vehicle movement, the controller establishes a connection with the paired user's device and sends a command to complete the payment.

Additionally, the system can accurately detect when the user has started parking. This is determined by analyzing the wireless signal strength between the control device and the user's device. A significant drop in signal strength, typically observed when the vehicle door is closed, indicates that the user has exited the vehicle. The control device then sends a parking start signal to the user's device, which can prompt the user to initiate payment if they are in a paid parking zone.

The system also includes a passenger monitor device for enhanced safety, particularly to prevent leaving a child unattended in the vehicle. The passenger monitor device, comprising an occupancy sensor, detects the presence of a passenger and communicates this information to the main control device. If a passenger is detected, the control device sends an alert to the user's device, prompting an alarm to notify the user.

The present invention is rooted in the physical realm, leveraging tangible hardware components such as motion detectors, control devices, and wireless communication modules to achieve its objectives. Therefore, the invention involves a concrete application of technology to solve real-world problems associated with parking fee management. The control device, comprising a motion detector, physically detects vehicle movement and interacts with the user's mobile device to automate parking fee transactions. This interaction is facilitated through established wireless communication protocols like Bluetooth, ensuring a seamless and reliable connection between the control device and the user's device.

Moreover, the invention provides a technical solution to the problem of user error in parking fee management by automating the start and stop functions of parking payments. This automation is achieved through the integration of motion detection technology and wireless communication, which are inherently technical in nature. The system's ability to detect vehicle movement and communicate this information to the user's device to terminate parking payments adds to the demonstration of its technical character. Additionally, the invention's capability to accurately determine when a user has started parking, based on wireless signal strength analysis, further underlines its technical nature. This feature eliminates the need for manual intervention and reduces the likelihood of user error, thereby enhancing the overall efficiency and reliability of the parking fee management process.

Furthermore, the invention enhances safety by incorporating a passenger monitor device that detects the presence of a child in the vehicle and alerts the driver. This feature involves the use of occupancy sensors and wireless communication to provide real-time alerts, thereby preventing potentially dangerous situations. The technical implementation of this safety feature demonstrates the invention's practical application and its contribution to solving real-world problems.

The following section includes a more detailed discussion of possible implementations of particular components of the system and details of the method of operation.

The control device can resemble a gate remote control or a compact handheld device similar to a key fob in form and size. It may be mounted within the vehicle cockpit using various methods such as adhesive mounts, magnetic holders, or clip-on brackets. Permanent mounting is not required; the control device can also be placed loosely within the vehicle, for example, in a door pocket or an organizer near the gearshift lever or handbrake.

Conventional parking applications typically support start-stop mode payments. The payment process is initiated by pressing a start button and terminated by pressing a stop button at the parking application installed on a user's mobile device, which is particularly convenient when the user is uncertain about the duration of their parking. The control device provided by the present invention essentially externalizes and automates this functionality.

The control device can be provided with at least one button that facilitates the initiation and termination of parking payments and the pairing with a new user's device. These functions can be assigned to a single button, with its functionality varying based on the current context (e.g., active or inactive payment status) or the method of activation (e.g., short press, long press, double-tap). Alternatively, separate buttons can be used for one or more functions.

An important feature of the control device is its ability to automatically terminate parking payments on behalf of the user by invoking the stop function in the parking application installed on the user's device. This occurs as soon as the control device detects that the vehicle is in motion. The motion detector, which may include an accelerometer, gyroscope, GPS, or speedometer, provides the necessary data to determine the vehicle's state. The motion detector can process this data to output the vehicle's state (e.g., stationary or in motion) or changes in that state (e.g., stopping or starting to move). This functionality can be continuously active or activated only after the user initiates the system using the start button. Alternatively, the motion detector can transmit its current measurements directly to the controller, which then evaluates the vehicle's state.

The controller is responsible for processing data and operating the relevant software. Preferably, the controller remains in a sleep state to conserve battery power and is activated only upon receiving data from the motion detector indicating vehicle movement. In its active mode, the controller communicates with the user's device via a wireless module.

The wireless module may utilize interfaces such as Bluetooth, Wi-Fi, Zigbee, or other low-power wireless communication technologies.

Upon detecting vehicle movement (particularly after the parking start function has been activated), the controller uses the wireless module to search for the previously paired user's device, establish a connection, and send a command to complete the payment. This function is limited to situations where the user has not manually terminated the parking session using the stop button.

The user's device can be any device on which the parking application is installed, such as a smartphone, tablet, smartwatch, or the vehicle's onboard computer.

Additionally, the controller can monitor the current payment status to ensure that commands are only sent if the payment has been initiated, thereby preventing unnecessary commands that could cause confusion or errors in the payment process.

After the initial pairing, the control device automatically establishes a connection if a previously paired user's device is within its range. The control device can support multiple user's devices, allowing different users to utilize the same control device in the same vehicle. This ensures that the control device is associated with the vehicle rather than a single phone or user.

Similarly, the parking application on the user's device can pair with multiple control devices. This allows a user with multiple vehicles to place a control device in each vehicle and pair each control device with the parking application. Each control device has a unique ID, enabling the parking application to recognize and pair with specific vehicles.

The control device communicates with the parking application on the user's device. This could be any parking application that includes a module for interacting with the control device described herein, allowing the control device to send start and stop commands to the parking application. Alternatively, a middleware application can facilitate communication between the control device and a standard parking application. This middleware application, provided by the control device's provider, enables compatibility with various existing parking applications.

The method for recognizing that the vehicle has stopped to initiate parking is designed to distinguish between normal traffic stops and parking stops. It can analyze the wireless signal strength between the control device and the user's device. Typically, when the user parks, they exit the vehicle and take the user's device with them. A significant drop in signal strength, particularly when the vehicle door is closed, indicates that the user has exited the vehicle. Upon determining that the vehicle has stopped, the controller takes a reference measurement of the signal strength and regularly samples it. If the drop in signal strength exceeds a threshold, indicating that the user has left the vehicle, a parking start signal is sent to the user's device.

By sampling signal strength only when the vehicle is stationary, the system reduces incorrect detections of parking initiation, such as when the user moves the phone within the vehicle. This approach also eliminates the need for constant signal strength sampling, reducing battery consumption for both the control device and the user's device.

The wireless signal strength threshold, below which it is determined that the user has left the vehicle, can be predetermined, calibrated during the initial pairing, or adjusted dynamically. During initial pairing, the user may perform the vehicle exit procedure multiple times to establish the signal drop threshold. This value can be monitored and adjusted during subsequent use to account for equipment wear, weather changes, environmental factors, or interference from other wireless devices.

After recognizing that the vehicle has been parked and the user has exited, the control device transmits this information to the parking application on the user's device via the same wireless module. Alternatively, if the signal strength of the first wireless module drops too low for effective communication, a second wireless module can be used.

Upon receiving a parking initiation signal, the parking application on the user's device can determine if the user is in a paid parking zone based on location data (e.g., GPS). If the user is in a paid zone, the parking application can remind the user to start the payment process or automatically initiate the payment.

The control device then monitors the vehicle's status, waiting for movement to signal the end of parking. It can be configured to ignore brief vehicle movements (e.g., less than one minute) after recognizing parking, to account for adjustments in parking position. Once parking termination is recognized, the control device sends a termination signal to the parking application on the user's device, which then communicates with the parking billing system to end the session.

The system also includes a passenger monitor device, which communicates with the main control device. The passenger monitor device includes an occupancy sensor to detect the presence of a passenger, particularly a child. This sensor can be a pressure-sensitive mat, an interface to a car seat occupancy sensor, or an infrared sensor detecting body heat. The occupancy sensor can be calibrated to distinguish between an occupied and unoccupied seat. Furthermore, a multi-sensor configuration can be used, with a fusion algorithm that combines data from different types of sensors. The sensor is connected to a controller, which also connects to a pairing button and a wireless module (e.g., Bluetooth, Zigbee). The passenger monitor device is most effective when used with car seats or cradles, which are recommended for the targeted age group. Multiple passenger monitor devices can be installed in a single vehicle and paired with the main control device.

When paired with at least one passenger monitor device, the main control device queries all paired passenger monitor devices upon recognizing that the vehicle has been parked. If a passenger monitor device detects a passenger, it transmits this information to the main control device. The main control device then sends a message to the user's device, alerting the user to the presence of a passenger in the vehicle. This message can be directed to the same parking application used for parking fee management, a dedicated application, or as a system message. The user's device can then display an alarm to notify the user of the passenger left in the vehicle.

In a particular aspect, the invention relates to a system for supporting a parking start-stop process of a vehicle, the system comprising a control device for placing within the vehicle, the control device comprising: a motion detector for detecting vehicle movement; a controller for processing data from the motion detector; a wireless communication module for communicating with a user's device operating a parking application; wherein the control device is configured to send a message to the user's device to invoke stop of parking process via the parking application, upon detecting that the vehicle is in motion based on data from the motion detector.

Preferably, the motion detector comprises an accelerometer and a gyroscope mounted within the control device.

Preferably, the controller is configured to remain in a sleep state and activate upon receiving, from the motion detector, data indicating vehicle movement.

Preferably, the control device includes at least one of: a start button for invoking the control device to send a message to the user's device to invoke start of parking via the parking application, and a stop button for invoking the control device to send a message to the user's device to invoke stop of parking process via the parking application.

Preferably, the control device is configured to be paired with multiple user devices.

Preferably, the control device is further configured to detect whether the user has started parking by monitoring the wireless signal strength between the control device and the user's device when data from the motion detector indicates that the vehicle is not in motion.

Preferably, the control device is configured to detect that the user has started parking by detecting a drop in the monitored wireless signal strength.

Preferably, the control device is configured to send a message to the user's device to invoke start of parking via the parking application, upon detecting that the user has started parking.

Preferably, the system further comprises a passenger monitor device with an occupancy sensor for detecting the presence of a passenger in the vehicle, wherein the passenger monitor device is configured to communicate with the control device.

Preferably, the control device is configured to communicate with the passenger monitor device upon detecting that the user has started parking, and upon detecting that a passenger is present in the vehicle, to send an alert to the user's device.

In another aspect, the invention relates to a method for supporting a parking start-stop process of a vehicle, the method comprising: equipping the vehicle with a control device, the control device comprising: a motion detector for detecting vehicle movement; a controller for processing data from the motion detector; a wireless communication module for communicating with a user's device operating a parking application; by means of the control device, sending a message to the user's device to invoke stop of parking process via the parking application, upon detecting that the vehicle is in motion based on data from the motion detector.

Preferably, the method further comprises detecting whether the user has started parking by monitoring the wireless signal strength between the control device and the user's device when data from the motion detector indicates that the vehicle is not in motion.

Preferably, the method further comprises detecting that the user has started parking by detecting a drop in the monitored wireless signal strength.

Preferably, the method further comprises sending a message to the user's device to invoke start of parking via the parking application, upon detecting that the user has started parking.

Preferably, the method further comprises equipping the vehicle with a passenger monitor device with an occupancy sensor for detecting the presence of a passenger in the vehicle, wherein the passenger monitor device is configured to communicate with the control device, the method comprising, upon detecting that the user has started parking, and upon detecting that a passenger is present in the vehicle, sending an alert to the user's device.

These and other features, aspects, and advantages of the invention will become better understood with reference to the following drawings, descriptions, and claims.

### BRIEF DESCRIPTION OF THE DRAWINGS

The accompanying drawings illustrate embodiments of the present invention and are provided for the purpose of explaining the principles of the invention. The drawings should not be construed as limiting the invention to the specific embodiments depicted.
FIG. 1 illustrates an exemplary implementation of the support system for managing parking fees in paid parking zones according to the present invention.
FIG. 2 shows a flowchart of the method of operation of the system as per the present invention.
FIG. 3 shows an example of a graphical user interface (GUI) of the parking application installed on the user's device for operating the parking system.
FIG. 4 illustrates a schematic of the passenger monitor device for detecting the presence of a child in the vehicle.
FIG. 5 shows a flowchart of the method of operation of the system when the control device is paired with a passenger monitor device.

### DETAILED DESCRIPTION OF EMBODIMENTS

The following detailed description is of the preferred modes of carrying out the invention. The description is not to be taken in a limiting sense, but is made merely for the purpose of illustrating the general principles of the invention.

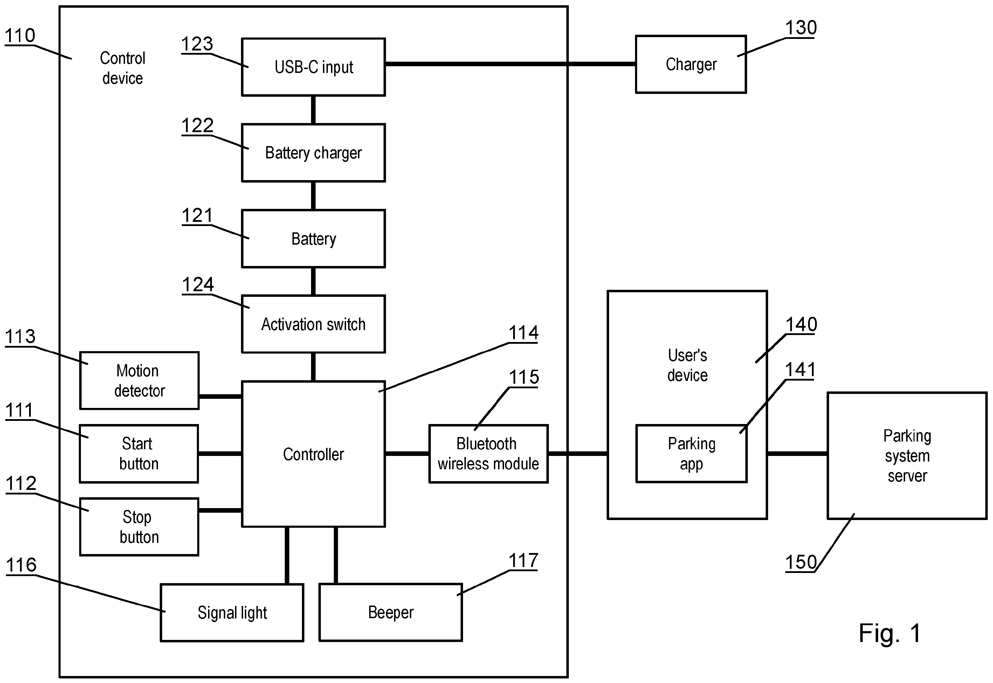

FIG. 1 illustrates an exemplary embodiment of the support system for managing parking fees in paid parking zones. The control device 110 is designed to resemble a garage door remote control in form and size. The control device 110 includes a start button 111 for manually initiating the parking fee process and a stop button 112 for manually terminating the parking fee process. Holding down the stop button 112 places the control device in a pairing state for connecting to a new phone. The control device 110 is provided with a motion detector 113, comprising an accelerometer and gyroscope, and a Bluetooth wireless module 115. These components are connected to a controller 114, which is powered by a battery 121. The battery 121 can be charged via a charger 122 connected to a USB-C power input 123, which can be powered by a charger 130, such as a vehicle charger or a mains charger. Additionally, the control device 110 includes an activation switch 124 to disconnect the controller 114 from the power supply to conserve battery power during extended periods outside paid parking zones. The controller 114 is also connected to a signal light 116 and a beeper 117. The signal light 116 indicates the status of the parking process, while the beeper 117 provides auditory signals for key stages of the system's operation, such as pairing, connection, and payment status. The control device 110 communicates with a user's device 140 operating a parking application 141, which in turn communicates with a parking system server 150.

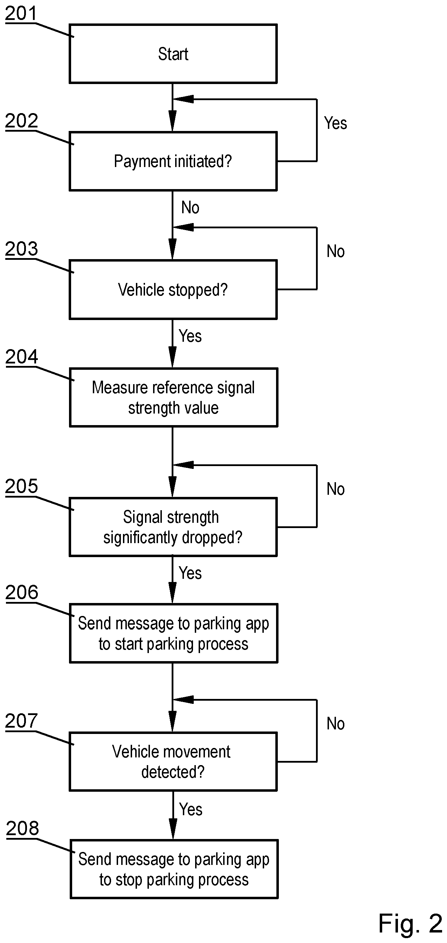

FIG. 2 presents a flowchart detailing the method of operation of the control device 110. The process begins at step 201, triggered by a signal from the motion detector 113 indicating that the vehicle has stopped. In step 202, the controller 114 checks with the parking application 141 on the user's device 140 to determine if payment has already been initiated. If payment has not been started, the process proceeds to step 203, where it confirms that the vehicle is stationary. In step 204, the controller 114 measures the initial (reference) value of the wireless signal strength between the control device 110 and the user's device 140. Step 205 involves continuous measurement until a significant drop in signal strength is detected, indicating that the user has exited the vehicle. Upon detecting such a drop, the controller determines in step 206 that the vehicle has been parked, and a message is sent to the parking application 141 on the user's device 140 to initiate the parking fee process. In step 207, the controller monitors the vehicle's status using the motion detector 113. If vehicle movement is detected, the controller sends in step 208 a signal to the parking application 141 on the user's device 140 to terminate the parking session.

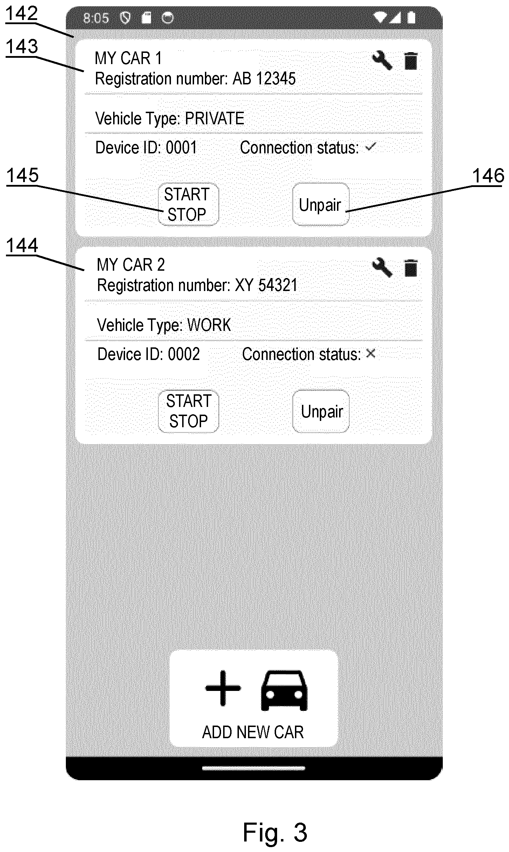

FIG. 3 illustrates an example of a graphical user interface (GUI) 142 for the parking application 141 installed on user hardware 140. The GUI 142 can pair with multiple control devices 110 and includes separate panels 143, 144 for each vehicle. Each panel features a start/stop button 145 for managing parking sessions and a pairing button 146 for pairing or unpairing the parking application 141 from the respective control device 110.

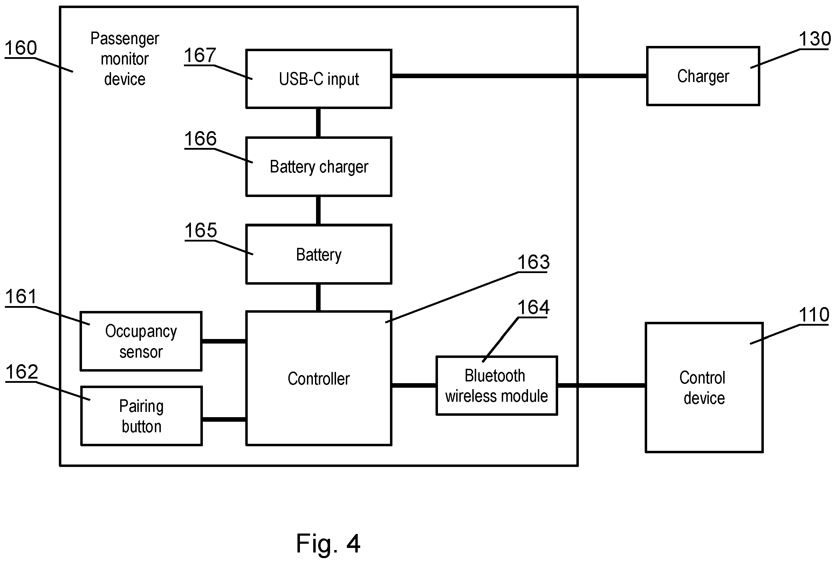

FIG. 4 provides a schematic of the passenger monitor device 160, designed to detect the presence of a child in the vehicle. The passenger monitor device 160 includes an occupancy sensor 161, such as a pressure-sensitive mat, connected to a controller 162. The controller 162 is also connected to a pairing button 163 and a Bluetooth wireless module 164 configured to communicate with the Bluetooth wireless module 115 of the control device 110. The controller 162 is powered by a battery 165, which can be charged via a charger 166 connected to a USB-C power input 167.

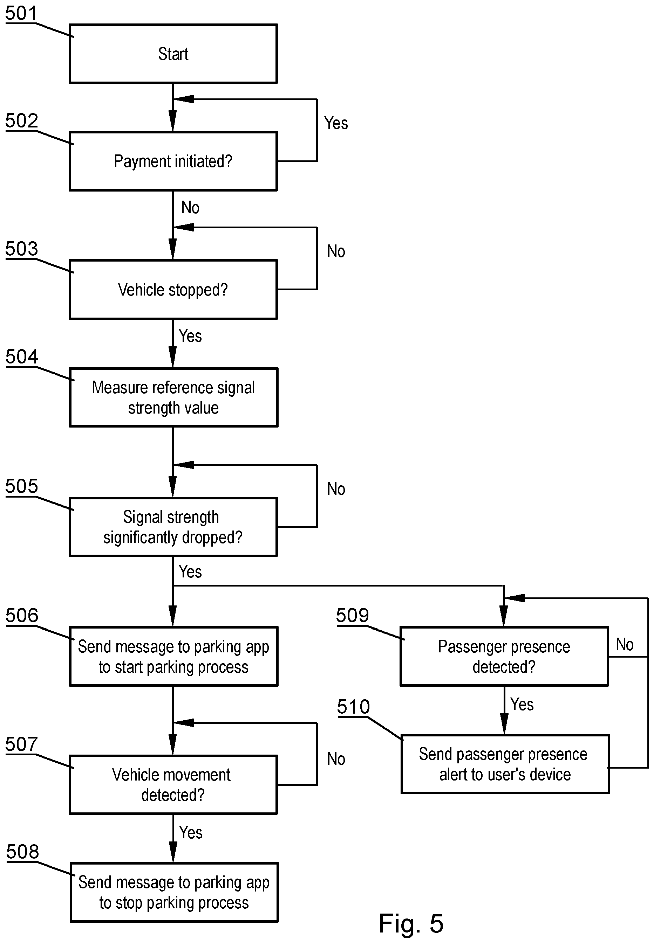

FIG. 5 illustrates a flowchart of the method of operation when the control device 110 is paired with a passenger monitor device 160. The steps 501-508 are equivalent to steps 201-208 in FIG. 2. Additionally, step 509, executed in parallel with step 506, involves querying the passenger monitor device 160 to detect the presence of a passenger. If a passenger is detected, step 510 sends a message to the user's device 140, alerting the user to the presence of a passenger in the parked vehicle. The system may then continue to monitor the vehicle's status and the occupancy sensor to ensure that the alert remains active until the passenger is removed from the vehicle.

While the invention has been described with respect to a limited number of embodiments, it will be appreciated that many variations, modifications, and other applications of the invention may be made. Therefore, the claimed invention as recited in the claims that follow is not limited to the embodiments described herein.

## Claims

1. A system for supporting a parking start-stop process of a vehicle, the system comprising a control device (110) for placing within the vehicle, the control device (110) comprising:
- a motion detector (113) for detecting vehicle movement;
- a controller (114) for processing data from the motion detector (113);
- a wireless communication module (115) for communicating with a user's device (140) operating a parking application (141);
wherein the control device (110) is configured to send a message to the user's device (140) to invoke stop of parking process via the parking application, upon detecting that the vehicle is in motion based on data from the motion detector (113).

2. The system according to claim 1, wherein the motion detector (113) comprises an accelerometer and a gyroscope mounted within the control device (110).

3. The system according to any of previous claims, wherein the controller (114) is configured to remain in a sleep state and activate upon receiving, from the motion detector (113), data indicating vehicle movement.

4. The system according to any of previous claims, wherein the control device (110) includes at least one of: a start button (111) for invoking the control device (110) to send a message to the user's device (140) to invoke start of parking via the parking application, and a stop button (112) for invoking the control device (110) to send a message to the user's device (140) to invoke stop of parking process via the parking application.

5. The system according to any of previous claims, wherein the control device (110) is configured to be paired with multiple user devices (140).

6. The system according to any of previous claims, wherein the control device (110) is further configured to detect whether the user has started parking by monitoring the wireless signal strength between the control device (110) and the user's device (140) when data from the motion detector (113) indicates that the vehicle is not in motion.

7. The system according to claim 6, wherein the control device (110) is configured to detect that the user has started parking by detecting a drop in the monitored wireless signal strength.

8. The system according to claim 6 or 7, wherein the control device (110) is configured to send a message to the user's device (140) to invoke start of parking via the parking application, upon detecting that the user has started parking.

9. The system according to any of claims 6-8, further comprising a passenger monitor device (160) with an occupancy sensor (161) for detecting the presence of a passenger in the vehicle, wherein the passenger monitor device (160) is configured to communicate with the control device (110).

10. The system according to claim 9, wherein the control device (110) is configured to communicate with the passenger monitor device (160) upon detecting that the user has started parking, and upon detecting that a passenger is present in the vehicle, to send an alert to the user's device (140).

11. A method for supporting a parking start-stop process of a vehicle, the method comprising:
- equipping the vehicle with a control device (110), the control device (110) comprising:
- a motion detector (113) for detecting vehicle movement;
- a controller (114) for processing data from the motion detector (113);
- a wireless communication module (115) for communicating with a user's device (140) operating a parking application;
- by means of the control device (110), sending a message to the user's device to invoke stop of parking process via the parking application, upon detecting that the vehicle is in motion based on data from the motion detector (113).

12. The method according to claim 11, further comprising detecting whether the user has started parking by monitoring the wireless signal strength between the control device (110) and the user's device (140) when data from the motion detector (113) indicates that the vehicle is not in motion.

13. The method according to claim 11 or 12, further comprising detecting that the user has started parking by detecting a drop in the monitored wireless signal strength.

14. The method according to claim 13, further comprising sending a message to the user's device (140) to invoke start of parking via the parking application, upon detecting that the user has started parking.

15. The method according to any of claims 11 to 14, further comprising equipping the vehicle with a passenger monitor device (160) with an occupancy sensor (161) for detecting the presence of a passenger in the vehicle, wherein the passenger monitor device (160) is configured to communicate with the control device (110), the method comprising, upon detecting that the user has started parking, and upon detecting that a passenger is present in the vehicle, sending an alert to the user's device (140).
